# EUROPÄISCHE PATENTSCHRIFT

(11) **EP 0 690 114 B1**
(45) Veröffentlichungstag und Bekanntmachung des Hinweises auf die Patenterteilung: **29.07.1998**
(21) Anmeldenummer: 95107458.2
(22) Anmeldetag: 17.05.1995
(51) Int. Cl.: C09J 5/04, B31F 5/04

(54) **Verfahren und Vorrichtung zum Verbinden von mindestens zwei Lagen eines mehrlagigen Bahnstranges**
Process and apparatus of joining together of at least two layers of multi-layered web
Procédé et dispositif pour relier au moins deux couches d'une bande à plusieurs couches

(30) Priorität: 29.06.1994 DE 4422724; 29.06.1994 DE 4422724
(43) Veröffentlichungstag der Anmeldung: 03.01.1996
(73) Patentinhaber: Baldwin Grafotec GmbH, 86165 Augsburg (DE)
(72) Erfinder: Kotterer, Werner J., D-86420 Diedorf (DE); Öttl, Josef, D-86420 Diedorf (DE)
(74) Vertreter: Munk, Ludwig, Dipl.-Ing.

(56) Entgegenhaltungen:
- DE-A- 2 131 256
- DE-A- 2 947 818
- DATABASE WPIL, Nr. 93-172 766, DERWENT PUBLICATIONS LTD., London; & JP-A-05 105 862 (TOKYO THREE BOND CO LTD)

## Beschreibung

Die Erfindung betrifft ein Verfahren zum Verbinden von mindestens zwei Lagen eines von einer Druckmaschine kommenden, mehrlagigen Bahnstrangs durch Verleimen entlang wenigstens eines durchgehenden oder unterbrochenen Leimstreifens, der auf einer der miteinander zu verbindenden Lagen des in Längsrichtung bewegten Bahnstrangs vor einem Falzvorgang hergestellt wird, und geht gleichzeitig auf eine Vorrichtung zur Durchführung dieses Verfahrens, die wenigstens einen Düsenkopf aufweist.

Ein Verfahren und eine Vorrichtung eingangs erwähnter Art sind aus der DE 37 40 045 C2 bekannt. Hierbei findet ein Einkomponenten-Leim Verwendung. Dieser führt zu einer hohen Anfälligkeit für Verstopfungen der Auftragdüse und macht dementsprechend eine häufige Systemspülung erforderlich, was zu hohen Ausfallzeiten führt. Außerdem besteht hier auch die Gefahr, daß der Leim an Bahnumlenkungen abspritzt und die Umgebung verunreinigt.

Die DE-A-2 131 256 enthält ein Verfahren zum Verbinden von zwei Werkstücken, beispielsweise eines Ferritmagneten mit seinem Spulengehäuse, mittels eines 2-Komponenten-Leims. Dabei werden die eine Komponente auf das eine Bauteil und die andere Komponente auf das andere Bauteil aufgetragen. Der Auftrag erfolgt flächig und zwar im stationären Zustand der beiden Bauteile. Ein ähnliches Verfahren enthält auch die JP-A-5 105 862.

Die DE-A-2 947 818 enthält ein Verfahren zum Verbinden von zwei Werkstücken, beispielsweise in Form einer Schaumstoffplatte und einer Blechtafel, wobei ebenfalls ein 2-Komponenten-Leim Verwendung findet. Die beiden Komponenten können hier zwar auf dasselbe Bauteil aufgetragen werden. Es ist jedoch eine Trocknung der zunächst aufgetragenen Komponente vorgesehen, bevor die zweite Komponente aufgetragen wird.

Hiervon ausgehend ist es daher die Aufgabe der vorliegenden Erfindung, den gattungsgemäßen Stand der Technik mit einfachen und kostengünstigen Mitteln so zu verbessern, daß Störungen des Produktionsbetriebs vermieden werden.

Diese Aufgabe wird verfahrensmäßig durch das Kennzeichen des Anspruchs 1 und vorrichtungsmäßig durch das Kennzeichen des Anspruchs 9 gelöst.

Dementsprechend besteht der verwendete Leim aus mindestens zwei Leim-Komponenten, die für sich keine die Lagen verbindende Eigenschaft aufweisen und die bei gegenseitigem Kontakt ein die Lagen verbindendes Reaktionsprodukt ergeben, wobei die einzelnen Leim-Komponenten nacheinander zumindest teilweise überdeckend jeweils auf dieselbe Lage des in Längsrichtung bewegten Bahnstrangs aufgetragen werden. Da die einzelnen Leim-Komponenten für sich nicht oder nur schwach klebrig sind, können diese auch sehr dünnflüssig sein, wodurch ein Verstofpen der Düsen und damit längere Produktionsausfallzeiten vermieden werden. Auf häufigere Systemspülungen kann daher in vorteilhafter Weise verzichtet werden. Die niedrige Viskosität der einzelnen Leim-Komponenten ermöglicht zudem die Verwendung vergleichsweise dünner Düsen, so daß ein sehr schmaler und/oder dünner Auftragstreifen erzeugt werden kann, was den Leimverbrauch und damit die Kosten deutlich mindert. Ein weiterer Vorteil ist darin zu sehen, daß in Folge der niedrigen Viskosität der einzelnen Leimkomponenten diese mit einem vergleichsweise niedrigen Druck aufgetragen werden können, was sich vorteilhaft auf die Erzielung einer kostengünstigen Bauweise der erforderlichen Vorrichtung auswirkt. Dadurch, daß beide Leim-Komponenten auf dieselbe Lage des Bahnstangs aufgetragen werden, wird auf einfache Weise eine Deckungsgleichheit des Auftragsstreifens der einzelnen Leim-Komponenten und damit eine hohe Produktionsgenauigkeit und Zuverlässigkeit erreicht. Die erfindungsgemäßen Maßnahmen ergeben daher eine ausgezeichnete Gesamtwirtschaftlichkeit.

Vorteilhafte Ausgestaltungen und zweckmäßige Fortbildungen der übergeordneten Maßnahmen sind in den Unteransprüchen angegeben. So können vorteilhaft Leimkomponenten Verwendung finden, die sich bei Kontakt durch Emulsions-Inversion schlagartig zu Leim verbinden. Hierdurch ist sichergestellt, daß die miteinander zu verbindenden Lagen auch bei den hohen Bahngeschwindigkeiten moderner Druckmaschinen bereits im Falzapparat miteinander verklebt werden.

Vorteilhaft enthält dabei die eine Komponente vorzugsweise Wasserglas (=Natriumsilikat) zur pH-Wert-Verschiebung in den alkalischen Bereich. Als besonders zweckmäßig hat sich ein dünnflüssiges Wasserglas / destilliertes Wasser-Gemisch mit 50% bis 70% Wasserglas und 50% bis 30% destilliertem Wasser erwiesen.

Die andere Leim-Komponente enthält zweckmäßig eine bei pH-Wert-Verschiebung schlagartig in Lösung gehende Acryl-Polymer-Substanz, vorzugsweise eine Dispersion aus 20% bis 40% Acrylpolymer und 80% bis 60% destiliertem Wasser.

Die Wasserglas-Acryl-Polymer-Mischung zeichnet sich durch extrem schnelle Bildung von klebefähigem Leim aus. Dies geschieht durch "Emulsions-Inversion", also dadurch, daß das als Dispersion im Wasser vorhandene Acrylpolymer bei Verschiebung des pH-Wertes z.B. durch Wasserglas in den alkalischen Bereich schlagartig lösbar wird, also dissoziiert, wobei sich ein klebefähiger Leim bildet.

Die Komponenten werden vorzugsweise auf die zugeordnete Lage aufgespritzt, was die Gleichmäßigkeit der Leimschicht optimiert und die Störanfälligkeit gegenüber transversalen Schwingungen oder Oberflächen-Unregelmäßigkeiten der Lage mindert.

Zweckmäßig wird eine Komponente kontinuierlich und eine Komponente diskontinuierlich aufgetragen, wobei die der kontinuierlich aufgetragenen Komponente zugeordnete Düse in nicht-zu-leimenden Bereichen wie potentiellen Schnittbereichen deaktiviert wird.

Außerdem kann zur Verbesserung des Falzergebnisses eine der Komponenten, vorzugsweise die schwächer klebende, kontinuierlich aufgetragene, als Falzhilfe Verwendung finden.

Ebenfalls zweckmäßig ist es, einen Kopf mit zwei Düsen vorzusehen, da so die Spur sehr präzise und störungsfrei einstellbar ist.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine schematische Seitenansicht einer einem Falzapparat vorgeordneten Längsfalzeinrichtung mit erfindungsgemäßer Leimauftragsvorrichtung, bei der ein Kopf mit zwei Düsen vorgesehen ist,
- Figur 2: die Draufsicht auf die in Figur 1 gezeigte Vorrichtung,
- Figur 3: eine schematische Seitenansicht einer einem Falzapparat vorgeordneten Längsfalzeinrichtung mit erfindungsgemäßer Leimauftragsvorrichtung, bei der zwei Köpfe mit je einer Düse vorgesehen sind und
- Figur 4: die Draufsicht auf die in Figur 3 gezeigte Vorrichtung.

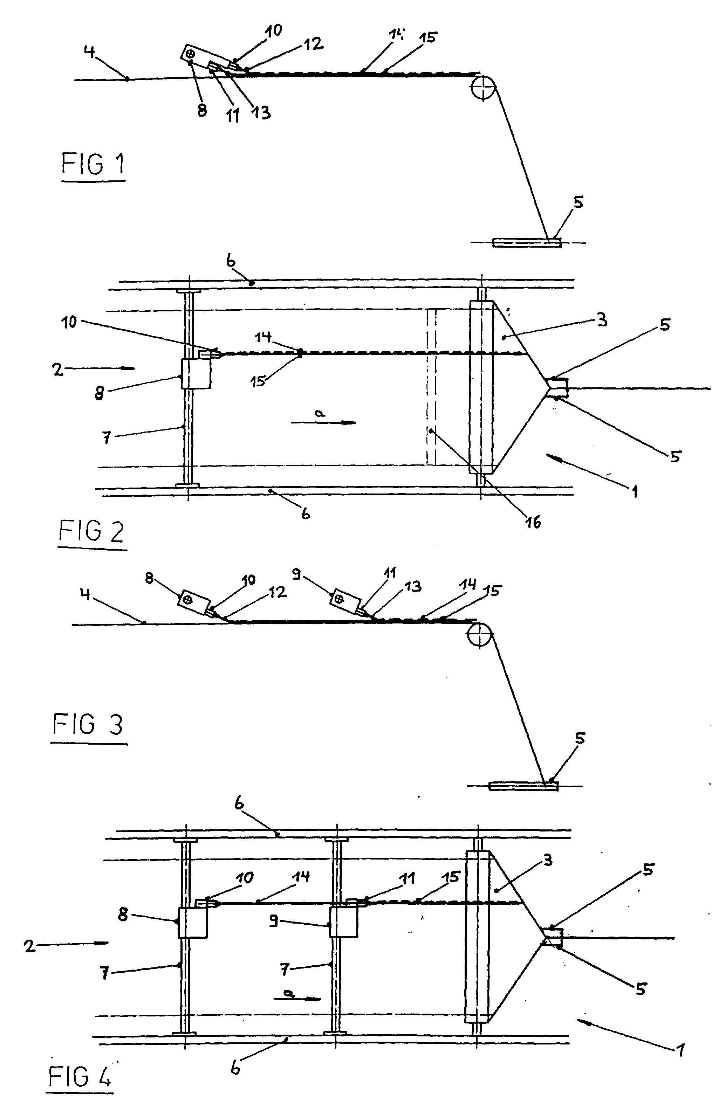

Fig. 1 und 2 zeigen eine erfindungsgemäße, der Längsfalzeinrichtung 1 vorgeordnete Leimauftragsvorrichtung 2 zur Durchführung des erfindungsgemäßen Verfahrens. Die Längsfalzeinrichtung 1 umfaßt einen Falztrichter 3 über den mindestens eine Lage 4 eines Bahnstranges in Richtung des Pfeiles a gezogen und zwischen den beiden Falzwalzen 5 durch Zusammenpressen gefalzt wird. Die beiden Falzwalzen 5 sind nach einer möglichen Ausführungsvariante im Bereich der Leimkomponentenstreifen 14,15 der Lage 4 mit in Umfangsrichtung umlaufenden Nuten versehen, die den bedeutenden Vorteil haben, Verleimung der Formwalzen 5 zu verhindern. An den Gestell-Seiten-Wänden 6 der Leimauftragsvorrichtung 2 ist eine Traverse 7 befestigt, auf der ein Düsenkopf 8 quer zur Bewegungsrichtung a des Bahnstranges verschiebbar angeordnet ist. Auf diesem Düsenkopf 8 sind zwei übereinander und in Richtung a versetzte Düsen 10,11 montiert. Die Unterbringung der Düsen 10,11 in einem Düsenkopf 8 ist kostengünstig, da nur ein Düsenkopf 8 und eine Traverse 7 nötig und zu montieren sind. Jede dieser Düsen 10,11 trägt berührungslos durch Aufspritzen oder Aufsprühen jeweils eine für sich höchstens schwach klebrige Leim-Komponente 12,13 auf die oberste Lage 4 des Bahnstranges auf. Die so auf der Lage 4 erzeugten Leim-Komponenten-Streifen 14,15 müssen durch Justierung der beiden Düsen 10,11 zumindest teilweise deckungsgleich aufgetragen werden, um durch Vermischung und Reaktion der beiden Leim-Komponenten 12,13 klebrigen Leim als Reaktionsprodukt entstehen zu lassen, der zwei aufeinanderzulegende Lagen miteinander verbindet. Die Unterbringung in einem Düsenkopf 8 vereinfacht präzise Überlappung der beiden Leim-Komponenten-Streifen 14,15. Die Justierung der beiden Leim-Komponenten-Streifen 14,15 erfolgt durch Justieren der beiden Düsen 10,11 im Düsenkopf 8 mit Justiereinrichtungen, wie z.B. Justierschrauben. Auch eine ferngesteuerte, nachregelbare Justierung ist mittels elektronisch angesteuerter Justiereinrichtungen möglich.

Die Überlappung der beiden Leim-Komponenten-Streifen 14,15 wird verbessert, wenn der Auftrag durch Aufspritzen etwa orthogonal zur Lage 4 des Bahnstranges erfolgt, da so Störauslenkung der Lage 4 durch Transversalschwingungen der Lage 4 in Richtung der Düsen geringere Versetzung der Leim-Komponenten-Streifen 14,15 auf der Lage 4 quer zu deren Fortbewegungsrichtung a bewirken, welche sonst die Deckung der Leimkomponenten-Streifen 14,15 stören würde.

Die Düsen 10,11 können in vier grundlegenden Modi betrieben werden. Eine Möglichkeit besteht darin, beide Düsen 10,11 kontinuierlich arbeiten zu lassen, um eine durchgehende Leimspur zu erzeugen. Bei einem anderen Betriebsmodus wird eine Düse 10/11 kontinuierlich und die andere Düse 11/10 diskontinuierlich betrieben; dadurch können insbesondere in den Soll-Schnitt-Bereichen 16 der Bahn nicht-klebende leimfreie Zonen geschaffen werden, so daß Verkleben der nachgeordneten Schnitteinrichtungen vermieden wird. Die kontinuierlich aufgetragene Leim-Komponente 12/13 kann dabei durch Softening, als lokales Aufweichen, der Lage 4 als Falzhilfe in der Längsfalzeinrichtung 1 wirken. Eine dritte mögliche Betriebsart der Düsen besteht darin, sie beide diskontinuierlich arbeiten zu lassen, so daß die Soll-Schnitt-Bereiche 16 völlig frei von Leim-Komponenten sind und noch besseres Schneiden ermöglicht wird. Der vierte Betriebsmodus ist anwendbar, wenn diese Düsen keine Leimung bewirken sollen; dann ist es möglich, mindestens eine der beiden Düsen 10/11, vorzugsweise mit Wasser oder anderen nichtklebrigen Flüssigkeiten, kontinuieriich zum Softening des Bahnstranges als Falzhilfe einzusetzen.

Die in den Figuren 3 und 4 gezeigte Vorrichtung unterscheidet sich von der Vorrichtung gemäß den Figuren 1 und 2 dadurch, daß die beiden Düsen 10,11 zwei Düsenköpfen 8,9, die auf jeweils einer Traverse 7 quer zur Bahnbewegungsrichtung a verschiebbar angeordnet sind, zugeordnet sind. Dadurch ist es zusätzlich zu allen, mit der Vorrichtung gemäß Figur 1 und 2 möglichen Betriebs-Modi möglich, die beiden Düsenköpfe 8,9 orthogonal zur Richtung des Pfeiles a versetzt anzuordnen, sodaß die beiden Leimkomponenten-Spuren 14,15 sich nicht überlappen. Die Leim-Komponenten-Spuren 14, 15 werden erst hinter dem Falztrichter 3 zwischen den Falzwalzen 5 durch Zusammenpressen zweier Lagen 4 eines Bahnstranges aufeinander gebracht. Dabei können die beiden Leimkomponentenstreifen 12,13 z.B. durch gleichen Abstand zum jeweiligen Bahnstrang-Rand und eine Rand-Führung in der Falzeinrichtung in Deckung gebracht werden. Da sich hierbei bis zum Zusammentreffen in den Falzwalzen 5 nur zwei räumlich getrennte Leimkomponenten-Streifen 14,15 auf einer Lage 4 des Bahnstranges befinden, die erst in der Falzeinrichtung zur Deckung gebracht werden, wird unerwünschte Verunreinigung der Umgebung vermieden, da die an der Umlenkung im Bereich des Falztrichters 3 der Längsfalzeinrichtung 1 abspritzenden Leim-Komponenten 12,13 im Gegensatz zu Leim höchstens schwach klebrig sind.

Die Positionierung der beiden Düsenköpfe erfolgt hier durch Verschieben auf der jeweils zugeordneten Traverse 7. Die Justierung der Düsen 10,11 und somit der Leim-Komponenten-Streifen 14,15 relativ zueinander kann wie hier einfach durch Verschiebung eines Düsenkopfes 8,9 auf einer Traverse 7 oder alternativ durch Justiereinrichtungen in mindestens einem Düsenkopf 8/9 erfolgen. Störungen der Deckung der beiden Leim-Komponenten-Spuren 12,13 durch Transversalschwingungen der Lage 4 könnten beispielsweise durch eine oder mehrere (hier nicht gezeigte) Walzen unterhalb des Bahnstranges, also auf der, der Leimauftragsvorrichtung 2 gegenüberliegenden Seite, teilweise kompensiert werden. Ablenkung der Leimkomponenten 12,13 -Strahlen durch Luftzug kann beispielsweise durch Erhöhung der Austrittsgeschwindigkeit verringert werden. Der Leim zur Verklebung der Bahnstrang-Lagen 4 entsteht aus zwei durch jeweils eine Düse 10,11 zumindest teilweise deckungsgleich aufzutragenden, dünnflüssigen und für sich nur schwach klebrigen Leim-Komponenten 12,13.

Die eine Leimkomponente 12/13 enthält beispielsweise ein als Feststoff in einer Flüssigkeit gelöstes Acryl-Polymer, also eine Dispersion. Ob das Acryl-Polymer eine kurze oder eine lange, beinartige Struktur aufweist, hängt unter anderem von der Molekülgröße und Form ab. Vorzugsweise ist dieses Acryl-Polymer in destilliertem, also weitgehend salz- und verunreinigungsfreiem Wasser gelöst. Als besonders geeignet haben sich Mischungsverhältnisse von 20% bis 40% Acryl-Polymer und 80% bis 60% destilliertem Wasser erwiesen.

Das in Wasser verdünnte Acryl-Polymer ist dünnflüssig und somit gut spritz- und sprühbar.

Die stabile Wasser-Acryl-Polymer-Dispersion verändert sich bei pH-Wert-Verschiebung durch einen als "Emulsions-Inversion" bezeichneten Effekt. Bei Verschiebung des pH-Wertes in den alkalischen Bereich wird das Acryl-Polymer schlagartig wasserlöslich und die Klebrigkeit des Reaktionsprodukts erhöht sich. Somit entsteht ausreichend schnell ein sehr klebriger Leim mit welchem in der der Klebevorrichtung nachgeordneten Falzeinrichtung mehrere Lagen eines oder mehrerer Papierstränge verklebt werden. Die Verschiebung des pH-Wertes zur Auslösung des "Emulsions-Inversions "-Effektes erfolgt zweckmäßig durch ein in einer Flüssigkeit gelöstes, alkalisch reagierendes Salz, in der anderen Leimkomponente 13/12, also ein Salz mit relativ starkem basischen Bestandteil und relativ schwachem Säurerest.

Als gut geeignet für die zweite Leimkomponente 13/12 hat sich Wasserglas (=Natriumsilikat) erwiesen. Alternativ ist auch die pH-Wert-Verschiebung mit anderen Salzen oder mit Laugen möglich. Um auch diese Leim-Komponente 13/12 gut mit einer Düse 10/11 aufsprühen oder aufspritzen zu können, sind vorzugsweise etwa 50 % bis 70 % Wasserglas in 50 % bis 30 % destilliertem Wasser gelöst. Dabei ist das Wasserglas teilweise dissoziiert, so daß diese Leimkomponente 13/12 alkalisch reagiert. Die angegebenen Zusammensetzungen und Mischungsverhältnisse der beiden Leimkomponenten 12/13 sind mit einem Kilopreis des Zwei-Komponenten-Klebers von höchstens 4,00 DM pro Kilo wesentlich kostengünstiger als bekannte Einkomponenten-Leime. Insbesondere gegenüber niederviskosen Spezialleimen ergibt sich ein Kostenvorteil von etwa 50 %.

Anstatt der Acryl-Polymer/Wasserglas-Kombination können auch beliebige andere Mehrkomponentenleime verwendet werden. Dabei sollten die Komponenten nach dem Kontakt miteinander möglichst schnell ein klebriges

Produkt ergeben, um gute Leimung zu gewährleisten. Wenn der Leim aus den Leim-Komponenten langsam entsteht, sollten die zu verbindenden Bahnstrang-Lagen z.B. nach dem Falzen aufeinandergedrückt werden, bis sie zufriedenstellend verbunden sind. Derart ist auch Leim vorstellbar, der sich relativ langsam aus den Leim-Komponenten 12,13 bildet und dennoch eine gute Leimung gewährleistet. Auch kann der Leim aus mehr als zwei Komponenten bestehen. Die Erfindung ist nicht auf die dargestellten Ausführungsbeispiele beschränkt. So können beispielsweise die Düsenköpfe an anderen Stellen oder auf andere Art angebracht sein, oder die nachfolgende Längsfalzeinrichtung anders ausgebildet sein. Möglich ist auch die Verwendung der Leimauftragsvorrichtung 2 mit einer Querfalzeinrichtung oder unabhängig von einer Falzeinrichtung.

## Patentansprüche

1. Verfahren zum Verbinden von mindestens zwei Lagen (4) eines von einer Druckmaschine kommenden, mehrlagigen Bahnstrangs durch Verleimen entlang wenigstens eines durchgehenden oder unterbrochenen Leimstreifens (14, 15), der auf einer der miteinander zu verbindenden Lagen (4) des in Längsrichtung bewegten Bahnstrangs vor einem Falzvorgang hergestellt wird, **dadurch gekennzeichnet, daß** der verwendete Leim aus mindestens zwei Leim-Komponenten (12, 13) besteht, die für sich keine die Lagen (4) verbindende Eigenschaft aufweisen und die bei gegenseitigem Kontakt ein die Lagen (4) verbindendes Reaktionsprodukt ergeben, und daß die einzelnen Leim-Komponenten nacheinander zumindest teilweise überdeckend jeweils auf dieselbe Lage (4) des in Längsrichtung bewegten Bahnstrangs aufgetragen werden.

2. Verfahren nach Anspruch 1, **dadurch gekennzeichnet, daß** die Leim-Komponenten (12,13) sich bei Kontakt durch Emulsions-Inversion schlagartig zu Leim verbinden.

3. Verfahren nach einem der vorhergehenden Ansprüche, **dadurch gekennzeichnet, daß** eine Leim-Komponente (12, 13) Wasserglas (=Natriumsilikat), vorzugsweise 50% bis 70% Wasserglas und 50% bis 30% destilliertes Wasser zur pH-Wert-Verschiebung in den alkalischen Bereich enthält.

4. Verfahren nach einem der vorhergehenden Ansprüche, **dadurch gekennzeichnet, daß** eine Leim-Komponente (12, 13) Acryl-Polymer, vorzugsweise 20% bis 40% Acryl-Polymer und 80% bis 60% destilliertes Wasser enthält.

5. Verfahren nach einem der vorhergehenden Ansprüche, **dadurch gekennzeichnet, daß** die Leim-Komponenten (12, 13) auf die Lage (4) aufgespritzt werden.

6. Verfahren nach Anspruch 5, **dadurch gekennzeichnet, daß** der Auftrag der Leim-Komponenten (12,13) auf die Lage (4) orthogonal zu dieser erfolgt.

7. Verfahren nach einem der vorhergehenden Ansprüche, **dadurch gekennzeichnet, daß** eine Leim-Komponente (12, 13) kontinuierlich und eine Leim-Komponente diskontinuierlich aufgetragen werden.

8. Verfahren nach einem der vorhergehenden Ansprüche, **dadurch gekennzeichnet, daß** eine der Leim-Komponenten (12, 13) als Falzhilfe Verwendung findet.

9. Vorrichtung zum Durchführen des Verfahrens nach wenigstens einem der vorhergehenden Ansprüche, mit wenigstens einem Düsenkopf (8, 9), **dadurch gekennzeichnet, daß** aus mehreren, an mindestens einem Düsenkopf (8, 9) angebrachten, vorzugsweise justierbaren Düsen (10, 11) jeweils eine Leim-Komponente (12, 13) eines Mehrkomponenten-Leims zumindest teilweise deckungsgleich auf eine Lage (4) eines mehrlagigen Bahnstranges auftragbar ist.

10. Vorrichtung nach Anspruch 9, **dadurch gekennzeichnet, daß** zwei Düsenköpfe (8, 9) mit jeweils einer Düse (10, 11) vorgesehen sind, die (8,9) vorzugsweise auf jeweils einer Traverse (7) angebracht sind, um sie so quer zur Bahnstrang (4) - Bewegungsrichtung (a) positionierbar zu machen.

11. Vorrichtung nach Anspruch 9, **dadurch gekennzeichnet, daß** ein Düsenkopf (8, 9) mit zwei Düsen (10, 11) vorgesehen ist, der auf einer Traverse (7) angebracht ist, um ihn so quer zur Bahnstrangbewegungsrichtung (a) positionierbar zu machen.

12. Vorrichtung nach einem der Ansprüche 9 - 11, **dadurch gekennzeichnet, daß** wenigstens eine Düse (10, 11) zum softening des zugeordneten Bahnstrangs (4) mit Falzhilfeflüssigkeit beaufschlagbar ist.

## Claims

1. A process of joining together of at least two layers (4) of a multi-layered web coming from a printing machine by gluing along at least one continuous or discontinuous glue strip (14, 15) which is formed on one of the layers (4) to be joined together of the web moved in the longitudinal direction before a folding process, **characterized in that** the used glue consists of at least two glue components (12, 13) which themselves do not show any property of joining together said layers (4) and which yield on mutual contact in a reaction product joining together said layers (4), and that the single glue components each are applied subsequenetly at least partly covering on the same layer (4) of the web moved in the longitudinal direction.

2. A process according to claim 1, **characterized in that** the glue components (12, 13) on contact suddenly combine to glue by emulsion inversion.

3. A process according to anyone of the preceding claims, **characterized in that** one glue component (12, 13) comprises water glass (= sodium silicate), preferably 50% to 70% water glass and 50% to 30% distilled water for displacement of the ph-value in the alkaline area.

4. A process according to anyone of the preceding claims, **characterized in that** one glue component (12, 13) comprises acrylic polymer, preferably 20% to 40% acrylic polymer and 80% to 60% distilled water.

5. A process according to anyone of the preceding claims, **characterized in that** the glue components (12, 13) are sprayed onto the layer (4).

6. A process according to claim 5, **characterized in that** application of the glue components (12, 13) onto the layer (4) is carried out orthogonally to said layer.

7. A process according to anyone of the preceding claims, **characterized in that** one glue component (12, 13) is applied continuously and one glue component is applied discontinuously.

8. A process according to anyone of the preceding claims, **characterized in that** one of the glue components (12, 13) is used as a folding aid.

9. An apparatus for carrying out the process of at least one of the preceding claims, comprising at least one nozzle head (8, 9) **characterized in that** out of each of several preferably adjustable nozzles (10, 11) arranged at least at one nozzle head (8, 9) one glue component (12, 13) of a multi-component glue is at least partly congruently applicable onto one layer (4) of a multi-layered web.

10. An apparatus according to claim 9, **characterized in that** two nozzle heads (8, 9) are provided each having a nozzle (10, 11) and being arranged on a traverse (7) for making them positionable transversely to the web (4) moving direction (a).

11. An apparatus according to claim 9, **characterized in that** a nozzle head (8, 9) is provided having two nozzles (10, 11) and being arranged on a traverse (7) for making it positionable transversely to the web moving direction (a).

12. An apparatus according to anyone of claims 9-11, **characterized in that** at least one nozzle (10, 11) is admittable for softening of the related web (4) with folding aid liquid.

## Revendications

1. Procédé pour assembler au moins deux couches (4) d'une bande à plusieurs couches venant d'une machine à imprimer, par collage le long d'au moins une ligne de colle continue ou intermittente (14, 15) produite sur une des couches (4) à assembler de la bande acheminée dans le sens longitudinal avant la mise en oeuvre d'un processus de pliage, **caractérisée en ce que** la colle utilisée est constituée d'au moins deux composants de colle (12, 13) ne présentant individuellement pas de propriétés permettant d'assembler les couches (4) et qui, en rentrant en contact l'un avec l'autre, donnent un produit de réaction reliant les deux couches (4), et en ce que les différents composants de colle sont appliqués l'un après l'autre avec au moins un recouvrement partiel sur la même couche (4) de la bande acheminée dans le sens longitudinal.

2. Procédé selon la revendication 1, **caractérisé en ce que** les composants de colle (12, 13) se lient brusquement en une colle lorsqu'ils rentrent en contact l'un avec l'autre du fait d'une inversion d'émulsion.

3. Procédé selon l'une des revendications précédentes, **caractérisé en ce qu**'un composant de colle (12, 13) contient du verre soluble (= silicate de sodium), de préférence de 50 % à 70 % de verre soluble et de 50 % à 30 % d'eau distillée pour déplacer le pH dans le domaine alcalin.

4. Procédé selon l'une des revendications précédentes, **caractérisé en ce qu**'un des composant de colle (12, 13) contient un polymère acrylique, de préférence de 20% à 40 % de polymère acrylique et de 80% à 60 % d'eau distillée.

5. Procédé selon l'une des revendications précédentes, **caractérisé en ce que** les composants de colle (12, 13) sont appliqués au pistolet sur la couche (4).

6. Procédé selon la revendication 5, **caractérisé en ce que** l'application des composants de colle (12, 13) sur la couche (4) est réalisée dans le sens orthogonal par rapport à celle-ci.

7. Procédé selon l'une des revendications précédentes, **caractérisé en ce qu**'un des composants de colle (12, 13) est appliqué en continu et un composant de colle est appliqué en discontinu.

8. Procédé selon l'une des revendications précédentes, **caractérisé en ce qu'**un des composants de colle (12, 13) est utilisé comme auxiliaire de pliage.

9. Dispositif pour la mise en oeuvre du procédé selon au moins l'une des revendications précédentes, avec au moins une tête de tuyère (8, 9) **caractérisé en ce qu**'à partir de plusieurs tuyères (10, 11), montées de préférence de façon ajustables sur au moins une tête de tuyère (8, 9), un composant de colle (12, 13) d'une colle à plusieurs composants peut être appliqué chaque fois de manière à obtenir au moins partiellement un recouvrement égal sur une couche (4) d'une bande à plusieurs couches.

10. Dispositif selon la revendication 9, **caractérisé en ce que** deux têtes de tuyère (8, 9) avec chacune une tuyère (10, 11) sont prévues, lesquelles (8, 9) sont montées de préférence chacune sur une traverse (7) de façon à pouvoir les positionner transversalement par rapport à la bande (4) dans le sens d'acheminement (a).

11. Dispositif selon la revendication 9, **caractérisé en ce qu'**une tête de tuyère (8, 9) avec deux tuyères (10, 11) est prévue, laquelle est montée sur une traverse (7) de façon à pouvoir la positionner transversalement au sens d'acheminement (a) de la bande.

12. Dispositif selon l'une des revendications 9 - 11, **caractérisé en ce qu**'au moins une tuyère (10, 11) peut être alimentée avec du liquide auxiliaire du pliage pour le ramollissement de la bande (4) correspondante.
